# EUROPÄISCHE PATENTSCHRIFT

(11) **EP 1 913 272 B1**
(45) Veröffentlichungstag und Bekanntmachung des Hinweises auf die Patenterteilung: **16.01.2013**
(21) Anmeldenummer: 06776409.2
(22) Anmeldetag: 26.07.2006
(51) Int. Cl.: F16D 3/223, B60B 27/00

(54) **ANORDNUNG AUS EINEM GLEICHLAUFGELENK UND EINER RADNABE**
ARRANGEMENT COMPRISING A HOMOCINETIC JOINT AND A WHEEL HUB
ENSEMBLE CONSTITUE D'UN JOINT HOMOCINETIQUE ET D'UN MOYEU DE ROUE

(30) Priorität: 04.08.2005 DE 102005036626
(43) Veröffentlichungstag der Anmeldung: 23.04.2008
(73) Patentinhaber: Volkswagen Aktiengesellschaft, 38440 Wolfsburg (DE)
(72) Erfinder: SCHAAF, Gregor, 38162 Cremlingen (DE); KAISER, Gerhard, 38550 Isenbüttel (DE); CLEMM, Oliver, 30161 Hannover (DE)
(86) Internationale Anmeldenummer: PCT/EP2006/007350
(87) Internationale Veröffentlichungsnummer: WO 2007/014679

(56) Entgegenhaltungen:
- DE-A1- 3 134 914
- DE-C1- 4 230 639
- JP-A- 2004 306 705

## Beschreibung

Die Erfindung bezieht sich auf das Gebiet der Befestigung von Gleichlaufgelenken und Gelenkwellen an Radnaben von Kraftfahrzeugen.

Insbesondere bezieht sich die aus eine Anordnung aus einem Gleichlaufgelenk und einer Radnabe, bei der das Gleichlaufgelenk ein Gelenkaußenteil mit einem Käfig aufweist, mittels eines Gelenkzapfens in eine Öffnung der Radnabe eingesteckt und in dieser drehfest gehalten ist, sowie weiterhin mittels eines Spannorgans axial mit der Radnabe verspannt ist.

Aus dem Stand der Technik sind unterschiedliche Methoden zum Befestigen von Gleichlaufgelenkwellen an Radnaben bekannt.

So ist es beispielsweise möglich, am Außenteil des Gleichlaufgelenks einen Gelenkzapfen vorzusehen, der in einer Öffnung der Radnabe aufgenommen wird. Am freien Ende dieses Gelenkzapfens ist ein Gewindeabschnitt ausgebildet, auf den eine sich an der Radnabe abstützende Mutter aufgeschraubt wird. Eine entsprechende Anordnung aus einem Gleichlaufgelenk und einer Radnabe wird beispielsweise in der JP 2001-304285 A offenbart.

Anstelle einer Mutter können auch andere Sicherungselemente, wie beispielsweise Sicherungsringe zum Festlegen des Gelenkzapfens verwendet werden. Ein entsprechendes Beispiel wird in der JP 2002-81460 A gezeigt.

Weiterhin ist bekannt, den Gelenkzapfen mittels einer zentrischen Schraube festzulegen, deren Kopf sich an der Radnabe abstützt. Aus der DE 34 30 067 A ist in diesem Zusammenhang bekannt, die Schraube möglichst lang auszuführen. Durch die große Dehnlänge wird der Einfluss von Setzeffekten nach dem Spannen vermindert, so dass die Schraubverbindung zum Gewährleisten eines ausreichenden Vorspannkraftniveaus weniger stark vorgespannt werden muss. Ähnliche Ausgestaltungen, welche die Merkmale des Oberbegriffs von Patentanspruch 1 aufweisen, finden sich weiterhin in der DE 197 42 740 A1, der DE 31 34 914 A1 und der DE 103 38 172 B3.

Der Erfindung liegt die Aufgabe zugrunde, bei einer solchen Anordnung die Befestigung des Gelenkzapfens an der Radnabe weiter zu verbessern.

Erfindungsgemäß wird eine Anordnung aus einem Gleichlaufgelenk und einer Radnabe geschaffen, bei der das Gleichlaufgelenk ein Gelenkaußenteil mit einem Käfig aufweist, mittels eines Gelenkzapfens in eine Öffnung der Radnabe eingesteckt und in dieser drehfest gehalten ist, sowie mittels eines Spannorgans axial mit der Radnabe verspannt ist. Diese Anordnung zeichnet sich dadurch aus, dass sich das Spannorgan bis in den gedachten Schwenkbereich des Käfigs in dem Gelenkaußenteil erstreckt.

Im Vergleich zu den vorstehend genannten Beispielen aus dem Stand der Technik ergibt sich hierdurch eine weiter vergrößerte Dehnlänge des Spannorgans, so dass sich die Mindestvorspannkraft bei Einhaltung der gewünschten Sicherheit mit einem geringeren Spannmoment erzielen lässt.

Überdies ergibt sich eine günstigere, weil belastungsgerechtere Krafteinleitung in den Gelenkzapfen. Aufgrund des weit in das Gelenk hineinverschobenen Kraftangriffspunkts des Spannorgans wird der Gelenkzapfen durch die Vorspannkraft des Spannorgans wesentlich geringer oder sogar überhaupt nicht auf Zug beansprucht. Dies erlaubt unter Berücksichtigung der auftretenden Betriebslasten im Vergleich zu herkömmlichen Gestaltungen eine kompaktere Ausgestaltung und leichtere Bauweise und eine verbesserte Bruchfestigkeit im Bereich der Anlage des Gelenks an der Radnabe.

Die Verschraubung wird vorzugsweise so weit in das Gelenk hinein verschoben, dass diese die Beschickung des hierzu verschwenkten Käfigs mit Kugeln gerade nicht behindert. Für den Fall einer rein axialen Montage kann die Verschraubung bis kurz vor den Schwenkbereich bei maximalem Beugewinkel des Gelenks vorgeschoben werden.

Für die Anordnung des Spannorgans sowie des zugehörigen Gewindeabschnitts auf Seiten des Gelenkaußenteils sind vielfältige Variationen denkbar.

In einer vorteilhaften Ausgestaltung ist das Spannorgan ein Gewindebolzen. Dieser kann in der Art einer Dehnschraube ausgestaltet sein.

Ein das Spannorgan aufnehmender Gewindeabschnitt ist vorzugsweise integral mit dem Gelenkaußenteil ausgebildet.

Es ist jedoch auch möglich, ein Element, das einen das Spannorgan aufnehmenden Gewindeabschnitt ausbildet, in dem Gelenkaußenteil zu befestigen.

Dazu kann beispielsweise eine Gewindebuchse von der offenen Seite des Gelenkaußenteils in dieses eingepresst werden.

Möglich ist auch die Verwendung einer einfachen Mutter, die in dem Gelenkaußenteil gegen Verdrehen gesichert ist.

Eine gute Zugentlastung des Gelenkzapfens lässt sich auch dadurch sicherstellen, dass der größte Teil der Einschraublänge möglichst weit in das Gelenk, d. h. in Richtung der offenen Seite des Gelenkäußenteils verlagert wird. Gemäß einer vorteilhaften Ausgestaltung der Erfindung ist das den Gelenkzapfen aufweisende Gelenkaußenteil mit einer Anlageschulter an der Radnabe abgestützt. Bezogen auf diese Anlageschulter des Gelenkaußenteils liegen mindestens 50 Prozent der Einschraublänge innerhalb des Gelenks auf der zu der Gelenköffnung des Außenteils weisenden Seite.

Vorzugsweise bildet das Gelenkaußenteil des Gleichlaufgelenks eine den Käfig aufnehmende Glocke aus. In diese Glocke ragt ein Vorsprung hinein, der den Gewindeabschnitt für das Spannorgan aufweist. Der Vorsprung ist dabei so bemessen, dass er den Schwenkbereich, der für das Beschicken des Käfigs mit Kugeln und für die Beugung des Gelenks tatsächlich benötigt wird, nicht beeinträchtigt. Ein vollständiges Durchdrehen des Käfigs, das dessen gedachten Schwenkbereich definiert, ist hingegen nicht vorgesehen.

Gemäß einer weiteren Ausgestaltungsform wird der Bolzen in umgekehrter Richtung, d.h. von der offenen Seite des Gelenkaußenteils durch den Gelenkzapfen geführt. In diesem Fall erstreckt sich der Kopf des Bolzens, der sich in dem Gelenkaußenteil an diesem abstützt, in den gedachten Schwenkbereich des Käfigs.

Der Bolzen kann mittels einer Mutter oder unmittelbar mit der Radnabe verschraubt werden. Weiterhin ist es auch möglich, dessen freies Ende beispielsweise mit einem Sicherungsring festzulegen oder mit der Radnabe zu vernieten.

Zur drehfesten Verbindung des Gelenkzapfens mit der Radnabe kann die Öffnung derselben, die den Gelenkzapfen aufnimmt, an ihrem Innenumfang zumindest streckenweise mit einem Verzahnungsprofil versehen sein.

Nachfolgend wird die Erfindung anhand von in der Zeichnung dargestellten Ausführungsbeispielen näher erläutert. Die Zeichnung zeigt in:
- Figur 1: eine Schnittansicht einer Anordnung aus einem Gleichlaufgelenk und einer Radnabe nach einem ersten Ausführungsbeispiel der Erfindung,
- Figur 2: eine Schnittansicht einer Anordnung aus einem Gleichlaufgelenk und einer Radnabe nach einem zweiten Ausführungsbeispiel der Erfindung, und in
- Figur 3: eine Schnittansicht einer Anordnung aus einem Gleichlaufgelenk und einer Radnabe nach einem dritten Ausführungsbeispiel der Erfindung.

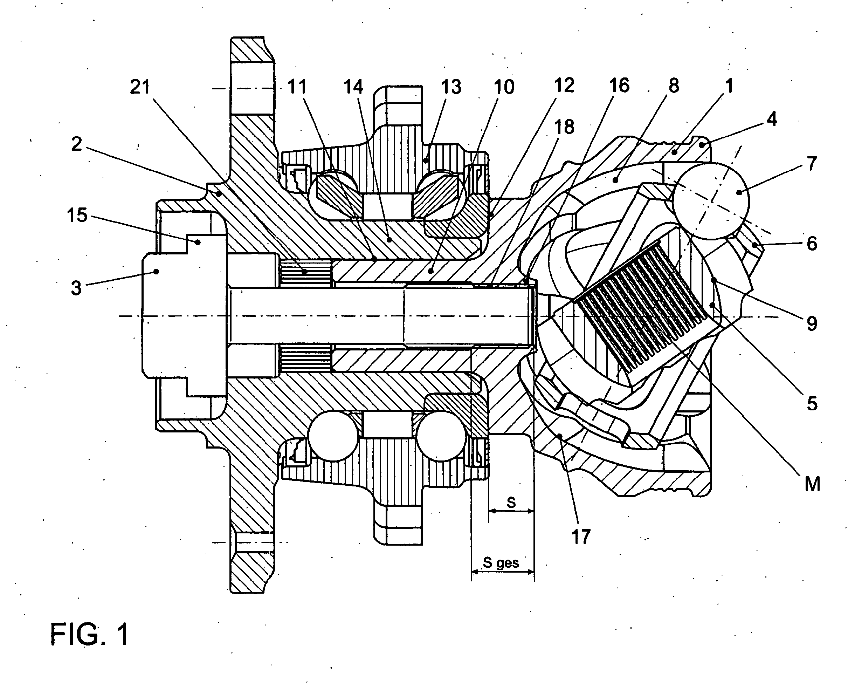

Das erste Ausführungsbeispiel in Figur 1 zeigt eine Anordnung aus einem Gleichlaufgelenk 1 und einer mit diesem gekoppelten Radnabe 2. Beide sind über ein Spannorgan 3 axial miteinander verspannt.

Das Gleichlaufgelenk 1, das hier beispielhaft als Festgelenk dargestellt ist, umfasst ein glockenförmig ausgebildetes Gelenkaußenteil 4, ein in diesem angeordnetes Gelenkinnenteil 5 und einen Käfig 6, der zwischen dem Außenteil 4 und dem Innenteil 5 um einen Drehmittelpunkt M schwenkbar gehalten ist. Dazu sind an der Käfigaußenseite und der Käfiginnenseite kugelförmig gekrümmte Flächen vorgesehen, die an jeweils entsprechenden Wandabschnitten des Außenteils 4 und des Innenteils 5 gleitbewegbar geführt sind. Die Krümmungsmittelpunkte der Außenflächen und Innenflächen liegen im Drehmittelpunkt M.

An dem Käfig 6 sind mehrere Fenster in Umfangsrichtung verteilt vorgesehen, welche jeweils eine Kugel 7 aufnehmen und diese vollständig umschließen. Die Kugeln 7 sind in rillenförmigen Laufbahnen 8 und 9 geführt, die einander an dem Außenteil 4 und dem Innenteil 5 paarweise gegenüberliegen. Über den Käfig 6 werden die Kugeln 7 in der Halbwinkelebene 5 des Gelenks 1. gehalten.

Bei dem dargestellten Ausführungsbeispiel sind das Gelenkaußenteil 4 und der Käfig 6 derart konfiguriert, dass diese beim Zusammenbau in Richtung ihrer Bauteilachsen ineinandergeschoben werden können, der Käfig also im nicht-geschwenkten Zustand eingebaut werden kann. Zum Einsetzen der Kugel 7 ist dieser jedoch in die in Figur 1 gezeigte Extremstellung schwenkbar.

An dem Gelenkaußenteil 4 ist weiterhin ein Gelenkzapfen 10 vorgesehen, der in eine Öffnung 11 der Radnabe eingesteckt ist. Der Gelenkzapfen 10 ist hier ein integraler Bestandteil des Gelenkaußenteils, kann jedoch auch als separates Bauteil an dem Gelenkaußenteil befestigt sein. Durch die Ausbildung einer entsprechenden Verzahnung 21 ist der Gelenkzapfen 10 in der Öffnung 11 drehfest gehalten.

Im zusammengebauten Zustand liegt das Gelenk 1 mit einer Anlageschulter 12 an der Radnabe 2 bzw. an dem innenseitigen Ring eines an der Radnabe 2 befestigten Radlagers 13 an. Das Radlager 13 ist dabei von der Seite des Gleichlaufgelenks 1 auf einen Wellenabsatz 14 der Radnabe 2 aufgeschoben.

Über das oben erwähnte Spannorgan 3 wird das Gleichlaufgelenk 1 axial mit der Radnabe 2 verspannt. Bei dem hier dargestellten, ersten Ausführungsbeispiel kommt als Spannorgan 3 ein Gewindebolzen zum Einsatz, der von der Seite der Radnabe 2 in den Gelenkzapfen 10 eingeführt ist und sich mit seinem Kopf 15 an der Radnabe 2 abstützt.

Erfindungsgemäß wird der Gewindebolzen mit einer großen Dehnungslänge ausgeführt, die sich bei Setzeffekten vorteilhaft auf das Vorspannkraftniveau auswirkt, so dass die Schraubverbindung mit einem verhältnismäßig geringen Moment vorgespannt werden kann, um eine definierte Mindestvorspannkraft zu gewährleisten.

Die große Dehnungslänge wird vor allem dadurch erreicht, dass sich das Spannorgan 3 bzw. der Gewindebolzen sehr weit in das Gleichlaufgelenk 1 hineinerstreckt, nämlich bis in den gedachten Schwenkbereich des Käfigs 6 hinein, und lediglich in diesem radfernen Bereicht verschraubt wird. Würde man in Figur 1 gedanklich den Käfig 6 weiter einwärts schwenken, so würde dieser gegen einen Vorsprung 16 stoßen, der das Ende des Spannorgans 3 aufnimmt und in die Glocke 17 des Gelenkaußenteils 4 hineinragt. Ein derart starkes Einschwenken ist jedoch bei dem dargestellten Gelenk 1 nicht erforderlich.

Weiterhin ist vorgesehen, dass, bezogen auf die Anlageschulter 12 des Gelenkaußenteils 4, der größte Teil s der Einschraublänge s_{ges} im Gelenk 1, d. h. auf der zu der offenen Seite des Außenteils 4 weisenden Seite angeordnet ist. Hierdurch liegt der Gelenkzapfen 10 nicht im Kraftfluss der Vorspannkraft des Spannorgans 3, was zu einer Verbesserung der Bauteilbelastbarkeit führt, da einer betriebsbedingten Torsions- und Biegebeanspruchung keine Zugkräfte aus der Vorspannkraft der Schraubverbindung überlagert werden. Auch wird die Bruchfestigkeit des Gelenkzapfens 10 im Bereich der Schulter 12 des Gelenkaußenteils 4 verbessert.

Vorzugsweise ist das Verhältnis s/ s_{ges} größer als 0,5.

Bei dem ersten Ausführungsbeispiel ist der das Spannorgan 3 aufnehmende Gewindeabschnitt 18 integral mit dem Gelenkaußenteil 4 ausgebildet ist. An dieser Stelle sind jedoch auch mehrteilige Ausführungen denkbar.

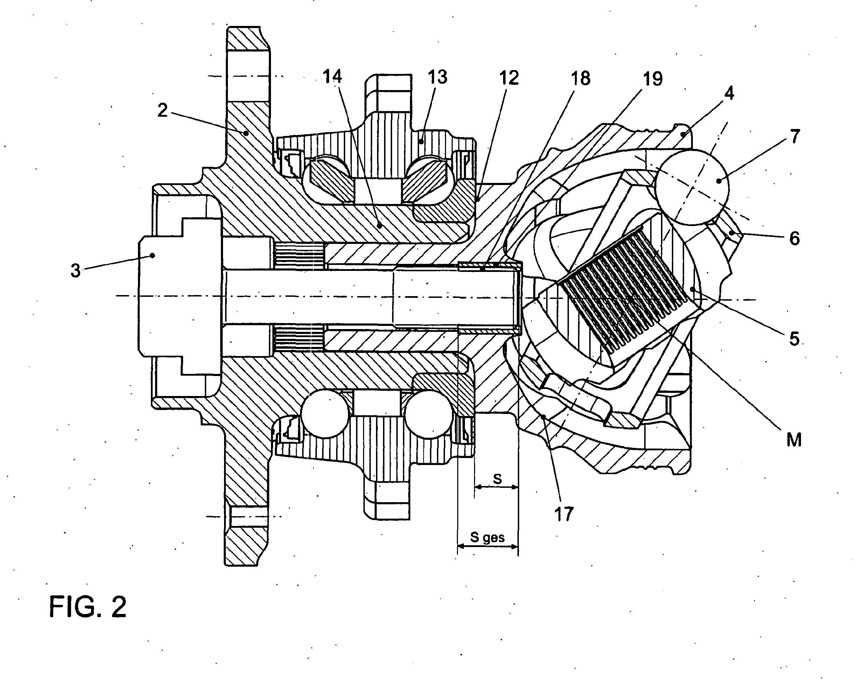

Figur 2 zeigt ein zweites Ausführungsbeispiel, bei dem sich der Gewindeabschnitt 18 an einer Gewindebuchse 19 befindet, die von der offenen Seite in das Gelenkaußenteil 4 eingepresst ist. Ansonsten gleicht der Aufbau des zweiten Ausführungsbeispiels dem des ersten Ausführungbeispiels.

Anstelle einer Gewindebuchse 19 kann auch eine Mutter in dem Gelenk angeordnet werden, die gegen ein Mitdrehen gesichert ist.

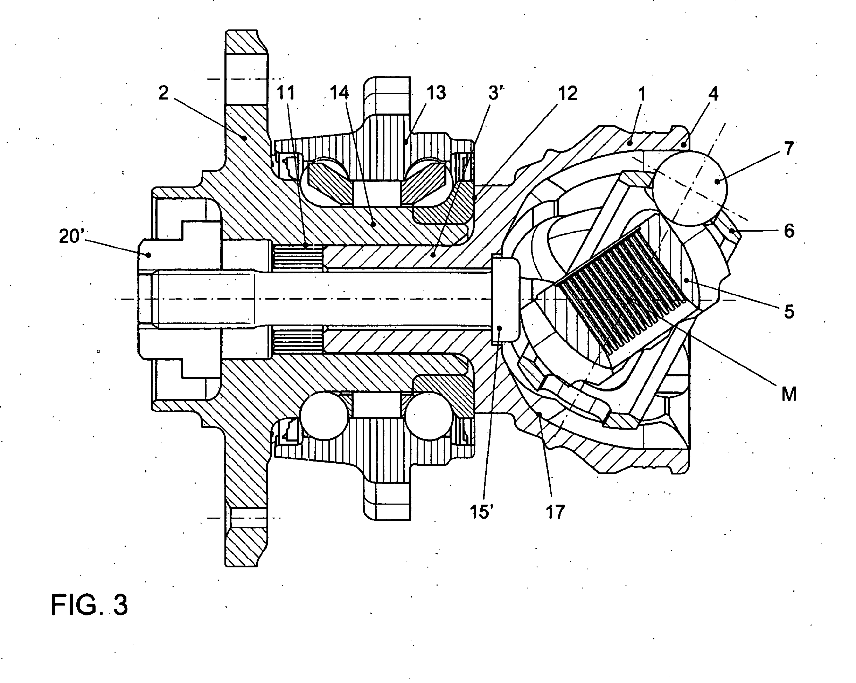

Ein weiteres Ausführungsbeispiel ist in Figur 3 gezeigt. Bei diesem ist das Spannorgan 3' im Vergleich zu den vorstehenden Ausführungsbeispielen in umgekehrter Richtung eingebaut. Auch hier kommt als Spannorgan 3' ein Gewindebolzen zum Einsatz, der sich mit seinem Kopf 15' jedoch in dem Gelenkaußenteil 4 abstützt. Der Kopf 15' liegt dabei in dem gedachten Schwenkbereich des Käfigs 6, so dass sich auch hier der Kraftangriffspunkt in Bezug auf die Anlageschulter 12 weit in dem Gelenkaußenteil 4 befindet und eine Zugbelastung des Gelenkzapfen 10 durch die Schraubverbindung vermieden wird.

Der Gewindebolzen ist mit einer radseitigen Mutter 20' verspannt, die sich axial an der Radnabe 2 abstützt. Alternativ hierzu ist es auch möglich, den Gewindebolzen unmittelbar mit einem radnahen Abschnitt der Radnabe 2 zu verschrauben, so dass wiederum eine große Dehnlänge gewährleistet bleibt.

In Abwandlung der dargestellten Ausführungsbeispiele kann anstelle eines Schraubverbunds auch eine andersartige Befestigung, beispielsweise mit Hilfe von Sicherungsringen oder durch Vernieten zum Einsatz kommen. Durch den in Bezug auf die Anlageschulter 12 weit, nämlich bis in den gedachten Schwenkbereich des Käfigs verlegten Kraftangriffspunktes wird in jedem Fall eine Zugentlastung des Gewindezapfens 10 erzielt.

Anstelle des dargestellten Gleichlaufgelenks und der dargestellten Radnabe können auch andere Gleichlaufgelenke und Radnaben zu Einsatz kommen, solange die Befestigung aneinander über einen Gelenkzapfen und mit einem zentrischen Spannorgan erfolgt.

Die Erfindung wurde vorstehend anhand bevorzugter Ausführungsbeispiele sowie weiterer Abwandlungen näher erläutert. Sie ist jedoch nicht auf diese Ausführungsbeispiele und Abwandlungen beschränkt, sondern umfasst alle durch die Patentansprüche definierten Ausgestaltungsformen.

### Bezugszeichenliste

- 1: Gleichlaufgelenk
- 2: Radnabe
- 3, 3': Spannorgan
- 4: Gelenkaußenteil
- 5: Gelenkinnenteil
- 6: Käfig
- 7: Kugel
- 8: Laufbahn
- 9: Laufbahn
- 10: Gelenkzapfen
- 11: Öffnung
- 12: Anlageschulter
- 13: Radlaler
- 14 .: Wellenansatz
- 15, 15': Kopf
- 16: Vorsprung
- 17: Glocke des Außenteils
- 18: Gewindeabschnitt
- 19: Gewindebuchse
- 20: Mutter
- 21: Verzahnung
- s: Einschraubtiefe im Gelenk jenseits der Anlageschulter 12
- S_{ges}: Gesamteinschraubtiefe

## Patentansprüche

1. Anordnung aus einem Gleichlaufgelenk (1) und einer Radnabe (2), bei der das Gleichlaufgelenk (1) ein Gelenkaußenteil (4) mit einem Käfig (6) aufweist, wobei das Gelenkaußenteil (4) mittels eines Gelenkzapfens (10) in eine Öffnung (11) der Radnabe (2) eingesteckt und in dieser drehfest gehalten ist, das Gelenkaußenteil (4) eine Anlageschulter (12) ausbildet und über diese mittels eines an dem Gelenkaußenteil angreifenden Spannorgans (3, 3') axial mit der Radnabe (2) verspannt ist, und sich das Spannorgan (3, 3') bis in den gedachten Schwenkbereich des Käfigs (6) in dem Gelenkäußenteil (4) erstreckt, **dadurch gekennzeichnet, dass** ein Kraftangriff des Spannorgans (3) innerhalb des Gelenkaußenteils (4) bezogen auf die Anlageschulter (12) im wesentlichen auf der von dem Gelenkzapfen (10) wegweisenden Seite erfolgt.

2. Anordnung nach Anspruch 1, **dadurch gekennzeichnet, dass** das Spannorgan (3, 3') ein Gewindebolzen ist.

3. Anordnung nach Anspruch 1 oder 2, **dadurch gekennzeichnet, dass** ein das Spannorgan (3) aufnehmender Gewindeabschnitt (18) integral mit dem Gelenkaußenteil (4) ausgebildet ist.

4. Anordnung nach Anspruch 1 oder 2, **dadurch gekennzeichnet, dass** ein Element, das einen das Spannorgan (3) aufnehmenden Gewindeabschnitt (18) ausbildet, in dem Gelenkaußenteil (4) festgelegt ist.

5. Anordnung nach Anspruch 1, 2 oder 4, **dadurch gekennzeichnet**, das eine Gewindebuchse (19) von der offenen Seite des Gelenkaußenteils (4) in dieses eingepresst ist.

6. Anordnung nach einem der Ansprüche 1 bis 5, **dadurch gekennzeichnet, dass** das den Gelenkzapfen (10) aufweisende Gelenkaußenteil (4) mit seiner Anlageschulter (12) an der Seite der Radnabe (2) abgestützt ist, und dass, bezogen auf die Anlageschulter (12) des Gelenkaußenteils (4), mindestens 50 Prozent der Einschraublänge innerhalb des Gelenks (1) auf der zu der offenen Seite des Außenteils (4) weisenden Seite liegen.

7. Anordnung nach einem der Ansprüche 1 bis 6, **dadurch gekennzeichnet, dass** das Gelenkaußenteil (4) des Gleichlaufgelenks eine den Käfig (6) aufnehmende Glocke (17) ausgebildet, in der sich ein Vorsprung (16) abhebt, der einen Gewindeabschnitt (18) für das Spannorgan (3) aufweist.

8. Anordnung nach einem der Ansprüche 1 oder 2, **dadurch gekennzeichnet**, das ein Spannorgan (3') von der offenen Seite des Gelenkaußenteils (4) durch den Gelenkzapfen (10) geführt und mittels einer Mutter (20') oder unmittelbar mit der Radnabe (2) verschraubt, oder mit der Radnabe (2) vernietet ist, wobei das Spannorgan (3') einen Kopf (15') aufweist, der sich in den gedachten Schwenkbereich des Käfigs (6) erstreckt.

9. Anordnung nach einem der Ansprüche 1 bis 8, **dadurch gekennzeichnet, dass** der Käfig (6) axial an dem Gelenkaußenteil (4) montierbar ist.

10. Anordnung nach einem der Ansprüche 1 bis 9, **dadurch gekennzeichnet, dass** die Öffnung (11) der Radnabe (2), welche den Gelenkzapfen (10) aufnimmt, an ihren Innenumfang zumindest streckenweise mit einem Verzahnungsprofil versehen ist.

## Claims

1. Arrangement comprising a constant velocity joint (1) and a wheel hub (2), in which arrangement the constant velocity joint (1) has a joint outer part (4) with a cage (6), the joint outer part (4) being plugged by means of a pivot (10) into an opening (11) of the wheel hub (2) and being held fixedly in terms of rotation in the latter, the joint outer part (4) forming a bearing shoulder (12) and being braced axially via the latter to the wheel hub (2) by means of a stressing member (3, 3') which acts on the joint outer part, and the stressing member (3, 3') extending as far as the imaginary pivoting region of the cage (6) in the joint outer part (4), **characterized in that** a force action of the stressing member (3) within the joint outer part (4) takes place, in relation to the bearing shoulder (12), substantially on the side which points away from the pivot (10).

2. Arrangement according to Claim 1, **characterized in that** the stressing member (3, 3') is a threaded bolt.

3. Arrangement according to Claim 1 or 2, **characterized in that** a threaded section (18) which receives the stressing member (3) is formed integrally with the joint outer part (4).

4. Arrangement according to Claim 1 or 2, **characterized in that** an element which forms a threaded section (18) which receives the stressing member (3) is fixed in the joint outer part (4).

5. Arrangement according to Claim 1, 2 or 4, **characterized in that** a threaded bush (19) is pressed into the joint outer part (4) from the open side of the latter.

6. Arrangement according to one of Claims 1 to 5, **characterized in that** the joint outer part (4) which has the pivot (10) is supported with its bearing shoulder (12) on the side of the wheel hub (2), and **in that**, in relation to the bearing shoulder (12) of the joint outer part (4), at least 50 per cent of the screw-in length within the joint (1) is on the side which points towards the open side of the outer part (4).

7. Arrangement according to one of Claims 1 to 6, **characterized in that** the joint outer part (4) of the constant velocity joint forms a bell (17) which receives the cage (6) and in which a projection (16) protrudes which has a threaded section (18) for the stressing member (3).

8. Arrangement according to either of Claims 1 and 2, **characterized in that** a stressing member (3') is guided by the pivot (10) from the open side of the joint outer part (4) and is screwed by means of a nut (20') or directly to the wheel hub (2), or is riveted to the wheel hub (2), the stressing member (3') having a head (15') which extends into the imaginary pivoting region of the cage (6).

9. Arrangement according to one of Claims 1 to 8, **characterized in that** the cage (6) can be mounted axially on the joint outer part (4).

10. Arrangement according to one of Claims 1 to 9, **characterized in that** that opening (11) of the wheel hub (2) which receives the pivot (10) is provided on its inner circumference at least in sections with a toothing profile.

## Revendications

1. Agencement constitué d'un joint homocinétique (1) et d'un moyeu de roue (2), dans lequel le joint homocinétique (1) présente une partie extérieure de joint (4) avec une cage (6), la partie extérieure de joint (4) étant enfoncée au moyen d'un tourillon de joint (10) dans une ouverture (11) du moyeu de roue (2) et étant maintenue de manière solidaire en rotation dans celle-ci, la partie extérieure de joint (4) constituant un épaulement de butée (12) et étant serrée axialement avec le moyeu de roue (2) par le biais dudit épaulement au moyen d'un organe de serrage (3, 3') venant en prise sur la partie extérieure de joint, et l'organe de serrage (3, 3') s'étendant jusque dans la région de pivotement imaginaire de la cage (6) dans la partie extérieure de joint (4), **caractérisé en ce qu'**une application de force de l'organe de serrage (3) à l'intérieur de la partie extérieure de joint (4) par rapport à l'épaulement de butée (12) a lieu essentiellement sur le côté opposé au tourillon de joint (10).

2. Agencement selon la revendication 1, **caractérisé en ce que** l'organe de serrage (3, 3') est un boulon fileté.

3. Agencement selon la revendication 1 ou 2, **caractérisé en ce qu'**une portion filetée (18) recevant l'organe de serrage (3) est réalisée intégralement avec la partie extérieure de joint (4).

4. Agencement selon la revendication 1 ou 2, **caractérisé en ce qu'**un élément, qui constitue une portion filetée (18) recevant l'organe de serrage (3), est fixé dans la partie extérieure de joint (4).

5. Agencement selon la revendication 1, 2 ou 4, **caractérisé en ce qu'**une douille filetée (19) est pressée depuis le côté extérieur de la partie extérieure de joint (4) dans cette dernière.

6. Agencement selon l'une quelconque des revendications 1 à 5, **caractérisé en ce que** la partie extérieure de joint (4) présentant le tourillon de joint (10) est supportée avec son épaulement de butée (12) contre le côté du moyeu de roue (2), et **en ce que**, par rapport à l'épaulement de butée (12) de la partie extérieure de joint (4), au moins 50 pour cent de la longueur de vissage à l'intérieur du joint (1) se situent sur le côté tourné vers le côté ouvert de la partie extérieure (4).

7. Agencement selon l'une quelconque des revendications 1 à 6, **caractérisé en ce que** la partie extérieure de joint (4) du joint homocinétique constitue une cloche (17) recevant la cage (6), dans laquelle cloche se soulève une saillie (16) qui présente une portion filetée (18) pour l'organe de serrage (3).

8. Agencement selon l'une quelconque des revendications 1 ou 2, **caractérisé en ce qu'**un organe de serrage (3') est guidé depuis le côté ouvert de la partie extérieure de joint (4) à travers le tourillon de joint (10) et est vissé au moyen d'un écrou (20') ou directement au moyeu de roue (2), ou est riveté au moyeu de roue (2), l'organe de serrage (3') présentant une tête (15') qui s'étend dans la région de pivotement imaginaire de la cage (6).

9. Agencement selon l'une quelconque des revendications 1 à 8, **caractérisé en ce que** la cage (6) peut être montée axialement sur la partie extérieure de joint (4).

10. Agencement selon l'une quelconque des revendications 1 à 9, **caractérisé en ce que** l'ouverture (11) du moyeu de roue (2), qui reçoit le tourillon de joint (10), est pourvue sur sa périphérie intérieure au moins en partie d'un profil denté.
